# EUROPEAN PATENT SPECIFICATION

(11) **EP 4 439 032 B1**
(45) Date of publication and mention of the grant of the patent: **09.09.2026**
(21) Application number: 22897710.4
(22) Date of filing: 18.11.2022
(51) Int. Cl.: G01L 19/04, G01L 9/00, G01L 19/14

(54) **PRESSURE SENSOR**
DRUCKSENSOR
CAPTEUR DE PRESSION

(30) Priority: 24.11.2021 CN 202111404667
(43) Date of publication of application: 02.10.2024
(73) Proprietor: Beijing Aurasky Electronics Co., Ltd., Beijing 100176 (CN)
(72) Inventor: ZHANG, Feng, Beijing 100176 (CN); HU, Lei, Beijing 100176 (CN)
(74) Representative: LifeTech IP Spies & Behrndt Patentanwälte PartG mbB
(86) International application number: PCT/CN2022/132796
(87) International publication number: WO 2023/093627

(56) References cited:
- CN-A- 110 879 111
- CN-A- 110 987 281
- CN-A- 114 088 282
- JP-A- 2012 058 023
- JP-A- 2013 036 935
- JP-A- 2013 036 935
- JP-A- H10 325 770
- US-A- 6 105 436
- US-B1- 6 568 274
- US-B2- 8 561 471

## Description

### TECHNICAL FIELD

The present disclosure relates to the field of semiconductor manufacturing, and in particular, to a pressure sensor.

### BACKGROUND

In the semiconductor field, when a chip is produced by etching or with other methods, high-precision monitoring of a pressure of a process gas is generally needed, so as to precisely control the pressure and flow of the gas, thereby producing a high-quality product.

An existing pressure sensor includes an upper pedestal, an electrode member, a lower pedestal, and a movable membrane, and the upper pedestal, the movable membrane, and the lower pedestal are stacked in sequence, are all metal conductors, and are connected together by welding or by other means. A top cover is disposed at a top opening of the upper pedestal, an upper space is formed by the top cover, the movable membrane, and the upper pedestal, and a lower space is formed by the movable membrane and the lower pedestal. A pressure in the upper space is known, and the upper space is generally in a high vacuum state, and has a pressure value set as Pr; and the lower space is communicated with a measured space through a pipeline, and has a pressure value set as Px. When Px increases, the movable membrane bulges upwards due to an increase of an upward force on the movable membrane. The electrode member is an insulator, each of an upper surface and a lower surface of the electrode member is covered with a metal layer, and the two metal layers are electrically connected to each other through a metal layer which is provided on an inner wall of a through hole in the electrode member. Thus, an upper surface of the movable membrane and the metal layer on the lower surface of the electrode member may form a plate capacitor, and a relationship between a capacitance value C of the plate capacitor and a distance d between the upper surface of the movable membrane and the metal layer on the lower surface of the electrode member is shown in the following formula:$C = ε S / d$ where S is area of a portion of the upper surface of the movable membrane opposite to the metal layer on the lower surface of the electrode member (i.e., area of a portion of the metal layer on the lower surface of the electrode member opposite to the upper surface of the movable membrane); and ε is a dielectric constant of a substance between the upper surface of the movable membrane and the lower surface of the electrode member. When Px changes, the movable membrane is changed, so that the distance d is changed accordingly, resulting in a change of the capacitance value C. The metal layer on the upper surface of the electrode member is connected to a circuit board through a lead, so that the change of the capacitance value C may be detected, thereby calculating the magnitude of Px.

A step is generally provided on an inner wall of the upper pedestal for supporting the electrode member. However, since the electrode member is the insulator (e.g., ceramic) and the upper pedestal is a metal pedestal, a thermal expansion coefficient of the upper pedestal is greater than that of the insulator, such that the electrode member and the upper pedestal expand to different extents when a temperature changes, which may lead to a stick-slip phenomenon of the electrode member and the upper pedestal, and further lead to certain relative displacement of the electrode member and the upper pedestal. After the temperature is restored to a value before the change, relative positions of the electrode member and the upper pedestal may be substantially restored to original positions, but still differ from the original positions very slightly. The slight differences may affect relative positions of the electrode member and the movable membrane, and may further affect final pressure measurement accuracy.

A known pressure sensor is disclosed in the document US6105436.

### SUMMARY

In order to solve at least one technical problem in the prior art, the present disclosure provides a pressure sensor, which can solve the problem of relative displacement of parts caused by a temperature change.

For achieving the objective of the present disclosure, there is provided a pressure sensor, including a first pedestal and an electrode member, wherein the first pedestal is provided with a supporting portion for supporting the electrode member, and a plurality of adjusting members are stacked in sequence between two opposite surfaces of the electrode member and the supporting portion; and thermal expansion coefficients of the electrode member, the plurality of adjusting members, and the first pedestal gradually increase in a direction from the electrode member to the supporting portion.

The thermal expansion coefficient of each of the adjusting members satisfies the following formula: ${C}_{M} = Ca + \frac{dC \times M \times f}{\left(N+1\right)}$ where C_{M} is a thermal expansion coefficient of an m^{th} adjusting member from an adjusting member closest to the electrode member, and M=1, 2, ..., N; N is a number of the adjusting members, and is greater than or equal to 2; dC=Cc-Ca, Ca is a thermal expansion coefficient of the electrode member, and Cc is a thermal expansion coefficient of the first pedestal; and f is a value within a preset range which is larger than or equal to N/(N+1) and less than or equal to (N+2)/(N+1).

Optionally, an amount of a shear-strain deformation of each of the adjusting members during thermal expansion is increased by increasing at least one of a specified pressure, a friction coefficient, and a total thickness; the specified pressure is a pressure applied to the electrode member in the direction from the electrode member to the supporting portion; the friction coefficient comprises a first friction coefficient between one adjusting member and the electrode member, a second friction coefficient between another adjusting member and the supporting portion, and a third friction coefficient between two adjacent adjusting members; and the total thickness is a sum of thicknesses of all the adjusting members.

Optionally, the specified pressure is greater than or equal to 250N; the first friction coefficient, the second friction coefficient, and the third friction coefficient are all greater than or equal to 0.1; and the total thickness is greater than or equal to 0.4mm.

Optionally, an amount of a shear-strain deformation of each of the adjusting members during thermal expansion is increased by reducing at least one of contact area, a ratio, a shear modulus of the adjusting members, and an elastic modulus of the adjusting members; the contact area comprises first contact area of contact surfaces between one adjusting member and the electrode member, second contact area of contact surfaces between another adjusting member and the supporting portion, and third contact area of contact surfaces between two adjacent adjusting members; and
each adjusting member is a ring, the ratio comprises a first ratio of the first contact area to a radial width of the ring, a second ratio of the second contact area to the radial width of the ring, and a third ratio of the third contact area to the radial width of the ring, and the radial width is a difference between an outer radius of the adjusting member and an inner radius of the adjusting member.

Optionally, the first contact area, the second contact area, and the third contact area are all less than or equal to 150mm²; the first ratio, the second ratio, and the third ratio are all less than or equal to 100mm; the shear modulus of the adjusting members is less than or equal to 100GPa; and the elastic modulus of the adjusting members is less than or equal to 250GPa.

Optionally, at least one contact surface of at least one of the adjusting members is a concave-convex surface.

Optionally, each adjusting member is annular, and concave regions and convex regions of the concave-convex surface are arranged alternately in a circumferential direction of the adjusting member.

Optionally, two adjusting members are provided, and are respectively a first adjusting member and a second adjusting member which are disposed in sequence in the direction from the electrode member to the supporting portion, and at least one contact surface of the first adjusting member is the concave-convex surface; and both contact surfaces of the second adjusting member are flat or at least one of the contact surfaces of the second adjusting member is the concave-convex surface

Optionally, any two adjacent ones among the electrode member, the plurality of adjusting members, and the supporting portion are independent of each other, or connected to each other.

Optionally, a thermal expansion coefficient of at least one of the adjusting members gradually increases in the direction from the electrode member to the supporting portion.

The present disclosure has the following beneficial effects:
in the pressure sensor provided in the embodiments of the present disclosure, the plurality of adjusting members are stacked in sequence between the two opposite surfaces of the electrode member and the supporting portion of the first pedestal, and each adjusting member can "absorb" at least part of relative displacement of the electrode member and the supporting portion by generating the microscopic deformations and the shear-strain deformations when the temperature changes; and moreover, the thermal expansion coefficients of the electrode member, the plurality of adjusting members, and the first pedestal are made to gradually increase in the direction from the electrode member to the supporting portion, so that the effects of the plurality of adjusting members of "absorbing" the relative displacement can be made uniform, and each adjusting member can play a role, thereby maximizing a utilization rate as a whole. Thus, the relative displacement of the electrode member and the supporting portion can be effectively reduced or eliminated, and it can be ensured that measurement accuracy of the pressure sensor is not affected. In addition, in the pressure sensor provided in the embodiments of the present disclosure, the plurality of adjusting members are just stacked between the electrode member and the supporting portion with no need to be further processed, and thus are simple in structure, which reduces part processing difficulty.

### BRIEF DESCRIPTION OF DRAWINGS

FIG. 1 is a schematic diagram of an external structure of a pressure sensor according to an embodiment of the present disclosure;
FIG. 2 is an exploded view of an internal structure of a pressure sensor according to an embodiment of the present disclosure;
FIG. 3 is a section view of a support portion of a first pedestal, an electrode member, and adjusting members before a temperature change according to an embodiment of the present disclosure;
FIG. 4 is a section view of a support portion of a first pedestal, an electrode member, and adjusting members after a temperature change according to an embodiment of the present disclosure; and
FIG. 5 is a block diagram of a first adjusting member according to an embodiment of the present disclosure.

### DETAIL DESCRIPTION OF EMBODIMENTS

In order to enable those of ordinary skill in the art to better understand the technical solution of the present disclosure, a pressure sensor provided in the present disclosure is described in detail below with reference to the accompanying drawings.

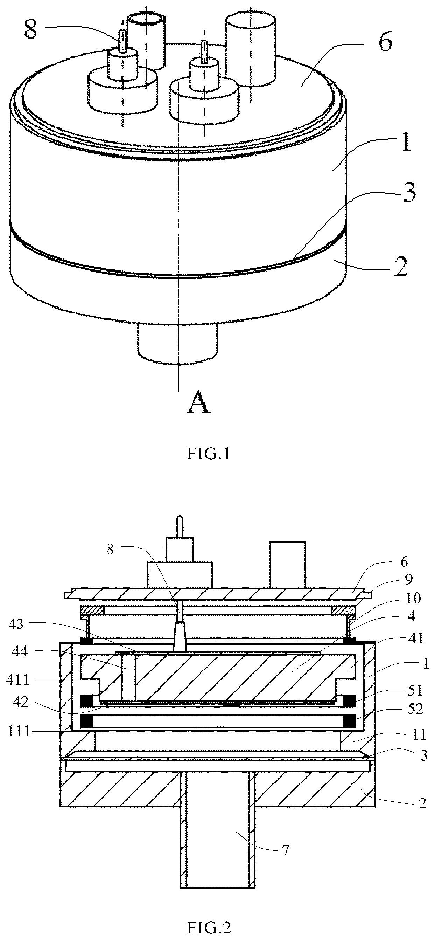

Referring to both FIG. 1 and FIG. 2, a pressure sensor according to an embodiment of the present disclosure includes a first pedestal 1, a second pedestal 2, a movable membrane 3, an electrode member 4, two adjusting members (51, 52), a top cover 6, a pipeline 7, a lead 8, an elastic member 9, and a support ring 10. The first pedestal 1, the movable membrane 3, and the second pedestal 2 are disposed in sequence from top to bottom along an axis A of the pressure sensor shown in FIG. 1, are all made of conductive metal materials, and are connected together by welding or by other means. Moreover, a top cover 6 is disposed at the top of the first pedestal 1 for sealing a top opening of the first pedestal 1, both the elastic member 9 and the support ring 10 are located between the top cover 6 and the electrode member 4, and the support ring 10 is located below the elastic member 9 for supporting the elastic member 9; and the elastic member 9 is in a compressed state when the top cover 6 is mounted on the first pedestal 1, so as to apply a pressure to the electrode member 4 in a direction from top to bottom along the axis A shown in FIG. 1. The elastic member 9 may be a compression spring, for example. An upper space is formed by the top cover 6, the movable membrane 3, and the first pedestal 1, and a lower space is formed by the movable membrane 3 and the second pedestal 2. A pressure in the upper space is known, and the upper space is generally in a high vacuum state, and has a pressure value set as Pr; and the lower space is communicated with a measured space through the pipeline 7, and has a pressure value set as Px. When Px increases, the movable membrane 3 may bulge upwards due to an increase of an upward force on the movable membrane 3.

The electrode member 4 is made of an insulating material (e.g., ceramic), a lower surface of the electrode member 4 is covered with a first metal layer 42, an upper surface of the electrode member 4 is covered with a second metal layer 43, and the first metal layer 42 is electrically connected to the second metal layer 43 through a metal layer (not shown) which is provided on an inner wall of a through hole 44 in the electrode member 4. A preset distance is provided between the movable membrane 3 and the first metal layer 42. Thus, the movable membrane 3 and the first metal layer 42 may form a plate capacitor, and a relationship between a capacitance value C of the plate capacitor and the distance d between the movable membrane 3 and the first metal layer 42 is shown in the following formula:$C = ε S / d$ where S is area of a portion of the movable membrane 3 opposite to the first metal layer 42 (i.e., area of a portion of the first metal layer 42 opposite to the movable membrane 3); and ε is a dielectric constant of a substance between the movable membrane 3 and the first metal layer 42. When Px changes, the movable membrane 3 is changed (for example, the movable membrane 3 bulges upwards), so that the distance d between the movable membrane 3 and the first metal layer 42 is changed accordingly, resulting in a change of the capacitance value C. The second metal layer 43 is connected to a circuit board (not shown) through the lead 8, so that the change of the capacitance value C may be detected, thereby calculating the magnitude of Px.

Moreover, the first pedestal 1 is provided with a supporting portion 11 for supporting the electrode member 4. Specifically, an annular protrusion 41 is provided at an edge (not including the first metal layer 42 and the second metal layer 43) of the electrode member 4, and is supported by the supporting portion 11. However, since the electrode member 4 is made of the insulating material (e.g., ceramic) and the first pedestal 1 is made of a metal material, a thermal expansion coefficient of the first pedestal 1 is greater than that of the electrode member 4. In this case, if the supporting portion 11 is in direct contact with the electrode member 4, when a temperature changes, a stick-slip phenomenon of the supporting portion 11 and the electrode member 4 may occur because the supporting portion 11 and the electrode member 4 expand to different extents, which may further lead to certain relative displacement of the supporting portion 11 and the electrode member 4. After the temperature is restored to a value before the change, relative positions of the supporting portion 11 and the electrode member 4 may be substantially restored to original positions, but still differ from the original positions very slightly. The slight differences may affect relative positions of the electrode member 4 and the movable membrane 3, and may further affect final pressure measurement accuracy.

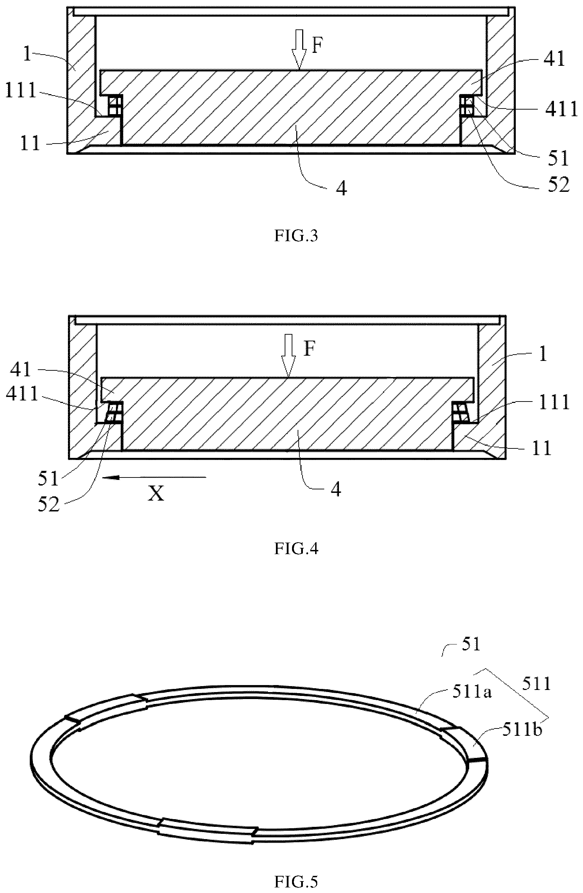

In order to solve the above problem, in this embodiment, referring to FIG. 3, the two adjusting members (51, 52) are stacked in sequence between two opposite surfaces of the annular protrusion 41 of the electrode member 4 and the supporting portion 11 (i.e., a lower surface 411 of the annular protrusion 41 and an upper surface 111 of the supporting portion 11), and thermal expansion coefficients of the electrode member 4, the two adjusting members (51, 52), and the first pedestal 1 gradually increase in a direction from the electrode member 4 to the supporting portion 11 (i.e., in a direction from top to bottom along the axis A shown in FIG. 1), that is, the thermal expansion coefficient of the electrode member 4 is smaller than that of the first adjusting member 51, the thermal expansion coefficient of the first adjusting member 51 is smaller than that of the second adjusting member 52, and the thermal expansion coefficient of the second adjusting member 52 is smaller than that of the first pedestal 1.

Certainly, in practical applications, according to specific needs such as adjusting the distance between the electrode member 4 and the movable membrane 3 or reducing or eliminating the relative displacement of the electrode member 4 and the supporting portion 11, the number of the adjusting members may be set to be three, four, five or more, but the present disclosure is not limited thereto.

In some alternative embodiments, a material of each adjusting member is not particularly limited in the present disclosure as long as the thermal expansion coefficient of each adjusting member satisfies the above condition.

In some alternative embodiments, at least one of the adjusting members is annular. For example, at least one of the adjusting members is a ring.

At least part of the relative displacement of the electrode member 4 and the supporting portion 11 of the first pedestal 1 may be "absorbed" with a microscopic deformation and a shear-strain deformation of each adjusting member generated during the change of the temperature. "Absorbing" the relative replacement means that each adjusting member may counteract, with its own deformations, at least part of the displacement of the electrode member 4 or the supporting portion 11 or the other adjusting member which is in contact with the adjusting member, so as to achieve the purpose of reducing or eliminating the relative displacement of the electrode member 4 and the supporting portion 11.

Moreover, with the thermal expansion coefficients of the electrode member 4, the plurality of adjusting members, and the first pedestal 1 gradually increasing in the direction from the electrode member 4 to the supporting portion 11 (i.e., in the direction from top to bottom along the axis A shown in FIG. 1), a difference between the thermal expansion coefficients of the adjacent parts among the electrode member 4, the plurality of adjusting members, and the supporting portion 11 can be reduced, and the effects of the plurality of adjusting members of "absorbing" the relative displacement can be made uniform, so that each adjusting member can play a role, thereby maximizing an utilization rate as a whole. For example, assuming that the relative displacement of the electrode member 4 and the supporting portion 11 is of 30 units, if three adjusting members are provided to absorb the relative displacement, the most effective way is that each adjusting member absorbs 10 units of the relative displacement, so that not only can the relative displacement of the electrode member 4 and the supporting portion 11 be completely eliminated, but also each adjusting member plays the same role in "absorbing" the relative displacement, thereby maximizing the utilization rate as a whole.

Thus, the pressure sensor provided in the embodiment of the present disclosure can effectively reduce or eliminate the relative displacement of the electrode member 4 and the supporting portion 11, and ensure that the measurement accuracy of the pressure sensor is not affected. In addition, the plurality of adjusting members are just stacked between the electrode member 4 and the supporting portion 11 with no need to be further processed, and thus are simple in structure, which reduces part processing difficulty.

According to the claimed invention, the thermal expansion coefficient of each adjusting member satisfies the following formula: ${C}_{M} = Ca + \frac{dC \times M \times f}{\left(N+1\right)}$ where C_{M} is the thermal expansion coefficient of the m^{th} adjusting member from the adjusting member closest to the electrode member 4, and M=1, 2, ..., N; N is the number of the adjusting members, and is greater than or equal to 2; Ca is the thermal expansion coefficient of the electrode member 4; dC=Cc-Ca, and Cc is the thermal expansion coefficient of the first pedestal 1; and f is a value within a preset range which is larger than or equal to N/(N+1) and less than or equal to (N+2)/(N+1).

With the above formula, under the condition that the thermal expansion coefficients of the electrode member 4, the N adjusting members, and the first pedestal 1 gradually increase in the direction from the electrode member 4 to the supporting portion 11 (i.e., in the direction from top to bottom along the axis A shown in FIG. 1), the thermal expansion coefficient of each adjusting member can be freely adjusted within the preset range, that is, the value f corresponding to each adjusting member can be independently adjusted to meet a specific need. Thus, adjustment flexibility can be increased, and a selection range of the thermal expansion coefficients can be expanded.

Taking the two adjusting members (51, 52) as an example, when the temperature changes, static friction is firstly generated between the electrode member 4 and one of the two adjusting members (51, 52) and between the supporting portion 11 and the other of the two adjusting members (51, 52), at this time, the two adjusting members (51, 52) deform microscopically (i.e., the microscopic deformations), and meanwhile, the static friction may cause shear stresses τ in the two adjusting members (51, 52) in a radial direction (i.e., an X direction in FIG. 4), resulting in shear strains γ of the two adjusting members (51, 52). A relationship between the shear stress τ and the shear strain γ satisfies the following formula:$τ = G γ$ where G is a shear modulus of the adjusting member.

As shown in FIG. 3, when the electrode member 4 is applied with a pressure in a direction from the electrode member 4 to the supporting portion 11 (i.e., in the direction from top to bottom along the axis A shown in FIG. 1), the two adjusting members (51, 52) are tightly squeezed between the electrode member 4 and the supporting portion 11, and cross-sectional shapes of the two adjusting members (51, 52) are rectangular before the temperature changes. As shown in FIG. 4, when the temperature rises, since the thermal expansion coefficient of the first pedestal 1 is the largest, the supporting portion 11 of the first pedestal 1 expands most outwards in the radial direction (i.e., the X direction in FIG. 4). At this time, since the static friction is generated at each of a contact surface between the second adjusting member 52 and the supporting portion 11, a contact surface between the second adjusting member 52 and the first adjusting member 51, and a contact surface between the first adjusting member 51 and the electrode member 4, both of the adjusting members (51, 52) have the shear-strain deformations, that is, the cross-sectional shapes of both of the adjusting members (51, 52) turn into a rhombus, but the relative positions of the electrode member 4 and the supporting portion 11 are not changed. As can be seen, the shear-strain deformations can "absorb" at least part of the relative displacement of the electrode member 4 and the supporting portion 11 in the X direction, so as to keep the relative positions of the electrode member 4 and the supporting portion 11 unchanged.

However, when the temperature changes too greatly, the microscopic deformations and the shear-strain deformations of the two adjusting members (51, 52) may not be enough to counteract the static friction between one of the adjusting members and the electrode member 4 and the static friction between the other adjusting member and the supporting portion 11, which may cause a slight stick-slip of the electrode member 4 and the supporting portion 11, thereby generating certain relative displacement.

In order to solve the above problem, the amount of the shear-strain deformation of each adjusting member needs to be large enough to counteract the static friction between the adjusting member and the electrode member 4/the supporting portion 11, so as to ensure no relative displacement of the electrode member 4 and the supporting portion 11. The amount of the shear-strain deformation of each adjusting member may be increased in various ways. For example, the amount of the shear-strain deformation of each adjusting member during thermal expansion may be increased by increasing at least one of a specified pressure, a friction coefficient, and a total thickness. The specified pressure is a pressure F applied to the electrode member 4 in the direction from the electrode member 4 to the supporting portion 11 (i.e., in the direction from top to bottom along the axis A in FIG. 1). As shown in FIG. 2, the elastic member 9 is in a compressed state when the top cover 6 is mounted on the first pedestal 1, and the pressure applied to the electrode member 4 by the elastic member 9 is the pressure F. The friction coefficient may be increased by increasing the pressure force F, and the friction coefficient includes a first friction coefficient between one adjusting member and the electrode member 4, a second friction coefficient between the other adjusting member and the supporting portion 11, and a third friction coefficient between the two adjacent adjusting members. The shear stresses τ on the adjusting members may be increased by increasing the friction coefficients. As can be seen from the above formula about the shear stress τ and the shear strain γ, the greater the shear stress τ, the greater the shear strain γ. Therefore, the increase in the shear stress τ may increase the amount of the shear-strain deformation. In addition, the friction coefficients may be directly increased by adjusting surface roughness of a contact surface of at least one of the parts.

The total thickness is the sum of thicknesses (i.e., dimensions in the direction of the axis A shown in FIG. 1) of all the adjusting members. For example, when each adjusting member is a ring, an axial dimension of the ring is the thickness of the adjusting member; and the larger the axial dimension of the ring is, the larger the amount of the shear-strain deformation of the ring is. Therefore, the amount of the shear-strain deformations may be increased by increasing the total thickness. It should be noted that the thicknesses of all the adjusting members may be completely the same or the thicknesses of part of the adjusting members may be the same.

In some alternative embodiments, in order to ensure that the amount of the shear-strain deformations of the adjusting members is large enough, the specified pressure is greater than or equal to 250N; the first friction coefficient, the second friction coefficient, and the third friction coefficient are all greater than or equal to 0.1; and the total thickness is greater than or equal to 0.4mm.

Based on increasing the amount of the shear-strain deformations of the adjusting members in the above ways, the amount of the shear-strain deformations of the adjusting members may also be increased in the following way: reducing at least one of contact area, a ratio, a shear modulus of the adjusting members, and an elastic modulus of the adjusting members, so as to increase the amount of the shear-strain deformation of each adjusting member during thermal expansion.

The contact area includes first contact area of contact surfaces between the adjusting member and the electrode member 4, second contact area of contact surfaces between the adjusting member and the supporting portion 11, and third contact area of contact surfaces between the two adjacent adjusting members. When each adjusting member is a ring, the ratio includes a first ratio of the first contact area to a radial width of the ring, a second ratio of the second contact area to the radial width of the ring, and a third ratio of the third contact area to the radial width of the ring. The radial width refers to a difference between an outer radius of the adjusting member and an inner radius of the adjusting member.

In some alternative embodiments, in order to ensure that the amount of the shear-strain deformations of the adjusting members is large enough, the first contact area, the second contact area, and the third contact area are all less than or equal to 150mm²; the first ratio, the second ratio, and the third ratio are all less than or equal to 100mm; the shear modulus of the adjusting members is less than or equal to 100GPa; and the elastic modulus of the adjusting members is less than or equal to 250GPa.

In some alternative embodiments, the contact area may be reduced in the following way: setting at least one contact surface of at least one adjusting member to be a concave-convex surface. The contact surface is a surface of the at least one adjusting member opposite to the supporting portion 11, or the electrode member 4, or the other adjusting member. Since the contact surface is the concave-convex surface, only the convex regions of the concave-convex surface are in contact with the supporting portion 11, or the electrode member 4, or the other adjusting member. Therefore, with the concave-convex surface, the contact area can be reduced; moreover, there are gaps between the concave regions of the concave-convex surface and the other surface adjacent to the concave-convex surface, and the gaps can facilitate the circulation of the air in the upper space of the pressure sensor when the upper space is vacuumized, so that the air in the upper space can be discharged more thoroughly, thereby increasing a vacuum degree of the upper space. Preferably, both contact surfaces of at least one adjusting member are concave-convex surfaces, which can further improve the circulation of the air in the upper space. In practical applications, the two concave-convex surfaces of a same adjusting member may be symmetrical or asymmetrical.

In a specific embodiment, each adjusting member is annular, and the concave regions and the convex regions of the concave-convex surface are arranged alternately along a circumferential direction of the adjusting member. For example, as shown in FIG. 5, taking the first adjusting member 51 as an example, when the first adjusting member 51 is a ring, at least one of the two contact surfaces (i.e., an annular end surface facing upwards and an annular end surface facing downwards in FIG. 5) of the ring is the concave-convex surface, and the concave regions and the convex regions of the concave-convex surface are arranged alternately along a circumferential direction of the ring. For example, both the upper end surface and the lower end surface of the first adjusting member 51 shown in FIG. 5 are concave-convex surfaces, and taking the upper end surface 511 as an example, the upper end surface 511 includes three concave regions 511a and three convex regions 511b, and the concave regions 511a and the convex regions 511b are alternately arranged, that is, any two concave regions 511a are not adjacent to each other, and any two convex regions 511b are not adjacent to each other. In this case, only the convex regions 511b can be in contact with the supporting portion 11, or the electrode member 4, or the other adjusting member, and the concave regions 511a are not in contact with the supporting portion 11, or the electrode member 4, or the other adjusting member, so that the contact area can be reduced. Certainly, in practical applications, the concave-convex surface may adopt any other structures as long as the contact area can be reduced.

Based on the above specific embodiment, furthermore, two adjusting members are provided, and are respectively the first adjusting member 51 and the second adjusting member 52 which are sequentially disposed in the direction from the electrode member 4 to the supporting portion 11, and at least one contact surface of the first adjusting member 51 is the concave-convex surface; and both contact surfaces of the second adjusting member 52 are flat or at least one of the contact surfaces of the second adjusting member 52 is the concave-convex surface. Thus, when the thicknesses of the adjusting members need to be adjusted, it is feasible to only replace the upper first adjusting member 51, which can simplify a disassembly process and increase replacement efficiency.

In some alternative embodiments, any two adjacent ones among the electrode member 4, the adjusting members, and the supporting portion 11 are independent of each other, or connected to each other by adhesion, welding, printing or the like. Being independent of each other refers to that any two adjacent ones among the electrode member 4, the adjusting members, and the supporting portion 11 are stacked together without being restricted by each other.

In some alternative embodiments, the thermal expansion coefficient of at least one adjusting member is non-uniform at different positions of the adjusting member. Preferably, the thermal expansion coefficient of at least one adjusting member gradually increases in the direction from the electrode member 4 to the supporting portion 11 (i.e., in the direction from top to bottom along the axis A shown in FIG. 1). In this way, the thermal expansion coefficient of the same adjusting member may vary along the axis A, which can also make the effects of "absorbing" the relative displacements uniform. For example, such adjusting member is made of a composite material.

In some alternative embodiments, the thermal expansion coefficient of each adjusting member is greater than or equal to 0.000005/K and less than or equal to 0.00002/K at a temperature of 20 °C.

In some alternative embodiments, the pressure sensor provided in the embodiments of the present disclosure may be applied to any product that needs pressure detection, such as a vacuum gauge or a pressure controller.

In summary, in the pressure sensor provided in the embodiments of the present disclosure, the plurality of adjusting members are stacked in sequence between the two opposite surfaces of the electrode member and the supporting portion of the first pedestal, and each adjusting member can "absorb" at least part of the relative displacement of the electrode member and the supporting portion by generating the microscopic deformations and the shear-strain deformations when the temperature changes; and moreover, the thermal expansion coefficients of the electrode member, the plurality of adjusting members, and the first pedestal are made to gradually increase in the direction from the electrode member to the supporting portion, so that the effects of the plurality of adjusting members of "absorbing" the relative displacement can be made uniform, and each adjusting member can play a role, thereby maximizing the utilization rate as a whole. Thus, the relative displacement of the electrode member and the supporting portion can be effectively reduced or eliminated, and it can be ensured that the measurement accuracy of the pressure sensor is not affected. In addition, in the pressure sensor provided in the embodiments of the present disclosure, the plurality of adjusting members are just stacked between the electrode member and the supporting portion with no need to be further processed, and thus are simple in structure, which reduces the part processing difficulty.

It should be understood that the above embodiments are merely exemplary embodiments adopted to illustrate the principle of the present disclosure, and the present disclosure is not limited thereto. Various modifications and improvements can be made by those of ordinary sill in the art without departing from the scope of the present invention as defined in the appended claims.

## Claims

1. A pressure sensor, comprising a first pedestal (1) and an electrode member (4), wherein the first pedestal (1) is provided with a supporting portion (11) for supporting the electrode member (4), and a plurality of adjusting members (51, 52) are stacked in sequence between two opposite surfaces (111, 411) of the electrode member (4) and the supporting portion (11); and
thermal expansion coefficients of the electrode member (4), the plurality of adjusting members (51, 52), and the first pedestal (1) gradually increase in a direction from the electrode member (4) to the supporting portion (11),
**characterized in that**:
the thermal expansion coefficient of each of the adjusting members (51, 52) satisfies the following formula: ${C}_{M} = Ca + \frac{dC \times M \times f}{\left(N+1\right)}$
where C_{M} is the thermal expansion coefficient of an M^{th} adjusting member (51; 52) from an adjusting member (51; 52) closest to the electrode member (4), and M=1, 2, ..., N; N is the number of the adjusting members (51, 52), and is greater than or equal to 2; dC=Cc-Ca, Ca is the thermal expansion coefficient of the electrode member (4), and Cc is the thermal expansion coefficient of the first pedestal (1); f is a value within a preset range, and the preset range is larger than or equal to N/(N+1) and less than or equal to (N+2)/(N+1).

2. The pressure sensor of claim 1, wherein an amount of a shear-strain deformation of each of the adjusting members (51, 52) during thermal expansion is increased by increasing at least one of a specified pressure, a friction coefficient, and a total thickness; the specified pressure is a pressure applied to the electrode member (4) in the direction from the electrode member (4) to the supporting portion (11); the friction coefficient comprises a first friction coefficient between one adjusting member (51) and the electrode member (4), a second friction coefficient between another adjusting member (52) and the supporting portion (11), and a third friction coefficient between two adjacent adjusting members (51, 52); and the total thickness is a sum of thicknesses of all the adjusting members (51, 52).

3. The pressure sensor of claim 2, wherein the specified pressure is greater than or equal to 250N; the first friction coefficient, the second friction coefficient, and the third friction coefficient are all greater than or equal to 0.1; and the total thickness is greater than or equal to 0.4mm.

4. The pressure sensor of claim 1, wherein an amount of a shear-strain deformation of each of the adjusting members (51, 52) during thermal expansion is increased by reducing at least one of contact area, a ratio, a shear modulus of the adjusting members (51, 52), and an elastic modulus of the adjusting members (51, 52); the contact area comprises first contact area of contact surfaces between one adjusting member (51) and the electrode member (4), second contact area of contact surfaces between another adjusting member (52) and the supporting portion (11), and third contact area of contact surfaces between two adjacent adjusting members (51, 52); and
each adjusting member (51; 52) is a ring, the ratio comprises a first ratio of the first contact area to a radial width of the ring, a second ratio of the second contact area to the radial width of the ring, and a third ratio of the third contact area to the radial width of the ring, and the radial width is a difference between an outer radius of the adjusting member (51; 52) and an inner radius of the adjusting member (51; 52).

5. The pressure sensor of claim 4, wherein the first contact area, the second contact area, and the third contact area are all less than or equal to 150mm²; the first ratio, the second ratio, and the third ratio are all less than or equal to 100mm; the shear modulus of the adjusting members (51, 52) is less than or equal to 100GPa; and the elastic modulus of the adjusting members (51, 52) is less than or equal to 250GPa.

6. The pressure sensor of claim 1, wherein at least one contact surface of at least one of the adjusting members (51, 52) is a concave-convex surface.

7. The pressure sensor of claim 6, wherein each adjusting member (51; 52) is annular, and concave regions (511a) and convex regions (511b) of the concave-convex surface are arranged alternately in a circumferential direction of the adjusting member (51; 52).

8. The pressure sensor of claim 6 or 7, wherein two adjusting members (51, 52) are provided, and are respectively a first adjusting member (51) and a second adjusting member (52) which are disposed in sequence in the direction from the electrode member (4) to the supporting portion (11), and at least one contact surface of the first adjusting member (51) is the concave-convex surface; and both contact surfaces of the second adjusting member (52) are flat or at least one of the contact surfaces of the second adjusting member (52) is the concave-convex surface.

9. The pressure sensor of claim 1, wherein any two adjacent ones among the electrode member (4), the plurality of adjusting members (51, 52), and the supporting portion (11) are independent of each other, or connected to each other.

10. The pressure sensor of claim 1, wherein a thermal expansion coefficient of at least one of the adjusting members (51, 52) gradually increases in the direction from the electrode member (4) to the supporting portion (11).

## Patentansprüche

1. Drucksensor, umfassend einen ersten Sockel (1) und ein Elektrodenelement (4), wobei der erste Sockel (1) mit einem Stützabschnitt (11) zum Tragen des Elektrodenelements (4) versehen ist und eine Mehrzahl von Einstellelementen (51, 52) der Reihe nach zwischen zwei einander gegenüberliegenden Oberflächen (111, 411) des Elektrodenelements (4) und des Stützabschnitts (11) gestapelt sind; und Wärmeausdehnungskoeffizienten des Elektrodenelements (4), der Mehrzahl von Einstellelementen (51, 52) und des ersten Sockels (1) in einer Richtung vom Elektrodenelement (4) zum Stützabschnitt (11) hin allmählich zunehmen, **dadurch gekennzeichnet, dass**:
der Wärmeausdehnungskoeffizient jedes der Einstellelemente (51, 52) die folgende Formel erfüllt: ${C}_{M} = Ca + \frac{dC \times M \times f}{\left(N+1\right)}$
wobei C_M der Wärmeausdehnungskoeffizient eines M-ten Einstellelements (51; 52) von einem dem Elektrodenelement (4) nächstgelegenen Einstellelement (51; 52) ist, und M = 1, 2, ..., N; N die Anzahl der Einstellelemente (51, 52) ist und größer als oder gleich 2 ist; dC = Cc - Ca, Ca der Wärmeausdehnungskoeffizient des Elektrodenelements (4) ist und Cc der Wärmeausdehnungskoeffizient des ersten Sockels (1) ist; f ein Wert innerhalb eines vorgegebenen Bereichs ist, und der vorgegebene Bereich größer als oder gleich N/(N+1) und kleiner als oder gleich (N+2)/(N+1) ist.

2. Drucksensor nach Anspruch 1, wobei ein Ausmaß einer Scherverzerrungsdeformation jedes der Einstellelemente (51, 52) während der Wärmeausdehnung durch Erhöhen von mindestens einem aus einer vorgegebenen Druckkraft, einem Reibungskoeffizienten und einer Gesamtdicke vergrößert wird; die vorgegebene Druckkraft eine auf das Elektrodenelement (4) in der Richtung vom Elektrodenelement (4) zum Stützabschnitt (11) ausgeübte Druckkraft ist; der Reibungskoeffizient einen ersten Reibungskoeffizienten zwischen einem Einstellelement (51) und dem Elektrodenelement (4), einen zweiten Reibungskoeffizienten zwischen einem anderen Einstellelement (52) und dem Stützabschnitt (11) und einen dritten Reibungskoeffizienten zwischen zwei benachbarten Einstellelementen (51, 52) umfasst; und die Gesamtdicke eine Summe der Dicken aller Einstellelemente (51, 52) ist.

3. Drucksensor nach Anspruch 2, wobei die vorgegebene Druckkraft größer als oder gleich 250 N ist; der erste Reibungskoeffizient, der zweite Reibungskoeffizient und der dritte Reibungskoeffizient alle größer als oder gleich 0,1 sind; und die Gesamtdicke größer als oder gleich 0,4 mm ist.

4. Drucksensor nach Anspruch 1, wobei ein Ausmaß einer Scherverzerrungsdeformation jedes der Einstellelemente (51, 52) während der Wärmeausdehnung durch Verringern von mindestens einem aus Berührungsfläche, einem Verhältnis, einem Schermodul der Einstellelemente (51, 52) und einem Elastizitätsmodul der Einstellelemente (51, 52) vergrößert wird; die Berührungsfläche eine erste Berührungsfläche der Kontaktoberflächen zwischen einem Einstellelement (51) und dem Elektrodenelement (4), eine zweite Berührungsfläche der Kontaktoberflächen zwischen einem anderen Einstellelement (52) und dem Stützabschnitt (11) und eine dritte Berührungsfläche der Kontaktoberflächen zwischen zwei benachbarten Einstellelementen (51, 52) umfasst; und
jedes Einstellelement (51; 52) ein Ring ist, das Verhältnis ein erstes Verhältnis der ersten Berührungsfläche zu einer radialen Breite des Rings, ein zweites Verhältnis der zweiten Berührungsfläche zu der radialen Breite des Rings und ein drittes Verhältnis der dritten Berührungsfläche zu der radialen Breite des Rings umfasst, und die radiale Breite eine Differenz zwischen einem Außenradius des Einstellelements (51; 52) und einem Innenradius des Einstellelements (51; 52) ist.

5. Drucksensor nach Anspruch 4, wobei die erste Berührungsfläche, die zweite Berührungsfläche und die dritte Berührungsfläche alle kleiner als oder gleich 150 mm^2 sind; das erste Verhältnis, das zweite Verhältnis und das dritte Verhältnis alle kleiner als oder gleich 100 mm sind; der Schermodul der Einstellelemente (51, 52) kleiner als oder gleich 100 GPa ist; und der Elastizitätsmodul der Einstellelemente (51, 52) kleiner als oder gleich 250 GPa ist.

6. Drucksensor nach Anspruch 1, wobei mindestens eine Kontaktoberfläche von mindestens einem der Einstellelemente (51, 52) eine konkav-konvexe Oberfläche ist.

7. Drucksensor nach Anspruch 6, wobei jedes Einstellelement (51; 52) ringförmig ist und konkave Bereiche (511a) und konvexe Bereiche (511b) der konkav-konvexen Oberfläche abwechselnd in einer Umfangsrichtung des Einstellelements (51; 52) angeordnet sind.

8. Drucksensor nach Anspruch 6 oder 7, wobei zwei Einstellelemente (51, 52) vorgesehen sind und jeweils ein erstes Einstellelement (51) und ein zweites Einstellelement (52) sind, die der Reihe nach in der Richtung vom Elektrodenelement (4) zum Stützabschnitt (11) angeordnet sind, und mindestens eine Kontaktoberfläche des ersten Einstellelements (51) die konkav-konvexe Oberfläche ist; und beide Kontaktoberflächen des zweiten Einstellelements (52) eben sind oder mindestens eine der Kontaktoberflächen des zweiten Einstellelements (52) die konkav-konvexe Oberfläche ist.

9. Drucksensor nach Anspruch 1, wobei beliebige zwei benachbarte unter dem Elektrodenelement (4), der Mehrzahl von Einstellelementen (51, 52) und dem Stützabschnitt (11) voneinander unabhängig sind oder miteinander verbunden sind.

10. Drucksensor nach Anspruch 1, wobei ein Wärmeausdehnungskoeffizient von mindestens einem der Einstellelemente (51, 52) in der Richtung vom Elektrodenelement (4) zum Stützabschnitt (11) hin allmählich zunimmt.

## Revendications

1. Capteur de pression, comprenant un premier socle (1) et un élément d'électrode (4), dans lequel le premier socle (1) est pourvu d'une portion de support (11) destinée à supporter l'élément d'électrode (4), et une pluralité d'éléments d'ajustement (51, 52) sont empilés successivement entre deux surfaces opposées (111, 411) de l'élément d'électrode (4) et de la portion de support (11) ; et
les coefficients de dilatation thermique de l'élément d'électrode (4), de la pluralité d'éléments d'ajustement (51, 52) et du premier socle (1) augmentent progressivement dans une direction allant de l'élément d'électrode (4) vers la portion de support (11), **caractérisé en ce que**:
le coefficient de dilatation thermique de chacun des éléments d'ajustement (51, 52) satisfait à la formule suivante: $C_M = C_a + dC \times M \times f / \left(N+1\right)$
où C_M est le coefficient de dilatation thermique d'un M^{e} élément d'ajustement (51 ; 52) à partir d'un élément d'ajustement (51 ; 52) le plus proche de l'élément d'électrode (4), et M=1, 2, ..., N ; N est le nombre des éléments d'ajustement (51, 52), et est supérieur ou égal à 2 ; dC=Cc-Ca, Ca est le coefficient de dilatation thermique de l'élément d'électrode (4), et Cc est le coefficient de dilatation thermique du premier socle (1) ; f est une valeur comprise dans une plage prédéfinie, et la plage prédéfinie est supérieure ou égale à N/(N+1) et inférieure ou égale à (N+2)/(N+1).

2. Capteur de pression selon la revendication 1, dans lequel une amplitude d'une déformation de cisaillement de chacun des éléments d'ajustement (51, 52) pendant la dilatation thermique est augmentée par augmentation d'au moins l'un parmi une pression spécifiée, un coefficient de frottement et une épaisseur totale ; la pression spécifiée est une pression appliquée à l'élément d'électrode (4) dans la direction allant de l'élément d'électrode (4) vers la portion de support (11) ; le coefficient de frottement comprend un premier coefficient de frottement entre un élément d'ajustement (51) et l'élément d'électrode (4), un second coefficient de frottement entre un autre élément d'ajustement (52) et la portion de support (11), et un troisième coefficient de frottement entre deux éléments d'ajustement adjacents (51, 52) ; et l'épaisseur totale est une somme des épaisseurs de tous les éléments d'ajustement (51, 52).

3. Capteur de pression selon la revendication 2, dans lequel la pression spécifiée est supérieure ou égale à 250 N ; le premier coefficient de frottement, le second coefficient de frottement et le troisième coefficient de frottement sont tous supérieurs ou égaux à 0,1; et l'épaisseur totale est supérieure ou égale à 0,4 mm.

4. Capteur de pression selon la revendication 1, dans lequel une amplitude d'une déformation de cisaillement de chacun des éléments d'ajustement (51, 52) pendant la dilatation thermique est augmentée par réduction d'au moins l'un parmi une aire de contact, un rapport, un module de cisaillement des éléments d'ajustement (51, 52) et un module d'élasticité des éléments d'ajustement (51, 52) ; l'aire de contact comprend une première aire de contact de surfaces de contact entre un élément d'ajustement (51) et l'élément d'électrode (4), une deuxième aire de contact de surfaces de contact entre un autre élément d'ajustement (52) et la portion de support (11), et une troisième aire de contact de surfaces de contact entre deux éléments d'ajustement adjacents (51, 52) ; et
chaque élément d'ajustement (51; 52) est un anneau, le rapport comprend un premier rapport de la première aire de contact à une largeur radiale de l'anneau, un second rapport de la deuxième aire de contact à la largeur radiale de l'anneau, et un troisième rapport de la troisième aire de contact à la largeur radiale de l'anneau, et la largeur radiale est une différence entre un rayon extérieur de l'élément d'ajustement (51; 52) et un rayon intérieur de l'élément d'ajustement (51; 52).

5. Capteur de pression selon la revendication 4, dans lequel la première aire de contact, la deuxième aire de contact et la troisième aire de contact sont toutes inférieures ou égales à 150 mm²; le premier rapport, le second rapport et le troisième rapport sont tous inférieurs ou égaux à 100 mm; le module de cisaillement des éléments d'ajustement (51, 52) est inférieur ou égal à 100 GPa; et le module d'élasticité des éléments d'ajustement (51, 52) est inférieur ou égal à 250 GPa.

6. Capteur de pression selon la revendication 1, dans lequel au moins une surface de contact d'au moins l'un des éléments d'ajustement (51, 52) est une surface concavo-convexe.

7. Capteur de pression selon la revendication 6, dans lequel chaque élément d'ajustement (51; 52) est annulaire, et des régions concaves (511a) et des régions convexes (511b) de la surface concavo-convexe sont disposées alternativement dans une direction circonférentielle de l'élément d'ajustement (51; 52).

8. Capteur de pression selon la revendication 6 ou 7, dans lequel deux éléments d'ajustement (51, 52) sont prévus, et sont respectivement un premier élément d'ajustement (51) et un second élément d'ajustement (52) qui sont disposés successivement dans la direction allant de l'élément d'électrode (4) vers la portion de support (11), et au moins une surface de contact du premier élément d'ajustement (51) est la surface concavo-convexe ; et les deux surfaces de contact du second élément d'ajustement (52) sont planes ou au moins l'une des surfaces de contact du second élément d'ajustement (52) est la surface concavo-convexe.

9. Capteur de pression selon la revendication 1, dans lequel deux quelconques parmi l'élément d'électrode (4), la pluralité d'éléments d'ajustement (51, 52) et la portion de support (11) qui sont adjacents sont indépendants les uns des autres, ou reliés les uns aux autres.

10. Capteur de pression selon la revendication 1, dans lequel un coefficient de dilatation thermique d'au moins l'un des éléments d'ajustement (51, 52) augmente progressivement dans la direction allant de l'élément d'électrode (4) vers la portion de support (11).
